# EUROPEAN PATENT SPECIFICATION

(11) **EP 0 465 918 B1**
(45) Date of publication and mention of the grant of the patent: **19.04.1995**
(21) Application number: 91110452.9
(22) Date of filing: 25.06.1991
(51) Int. Cl.: C09D 183/04, C09D 139/06, C08K 3/22, C08J 7/04

(54) **Abrasion resistant siloxane coatings**
Abriebbeständige Siloxanbeschichtungen
Revêtements à base de siloxanes, résistant à l'abrasion

(30) Priority: 29.06.1990 US 546076; 29.06.1990 US 546484; 29.06.1990 US 546069
(43) Date of publication of application: 15.01.1992
(73) Proprietor: PPG INDUSTRIES, INC., Pittsburgh Pennsylvania 15272 (US)
(72) Inventor: Basil, John Darwin, Pittsburgh, Pa. 15239 (US); Franz, Helmut, Pittsburgh, Pa. 15238 (US); Lin, Chia-Cheng, Gibsonia, PA. 15044 (US); Hunia, Robert Michael, Kittanning, PA. 16201 (US)
(74) Representative: Sternagel, Hans-Günther, Dr.

(56) References cited:
- US-A- 4 799 963
- WORLD PATENTS INDEX Derwent Publications Ltd., London, GB; AN 74-57472V (32) & JP-A-49003932

## Description

The present invention relates generally to the art of organic hybrid polymers of alkoxysilanes, and more particularly to the art of coatings which attenuate ultraviolet radiation.

US-A-4,405,679 to Fujioka et al. discloses a coated shaped article of a polycarbonate type resin of improved abrasion resistance comprising a shaped polycarbonate substrate, an undercoat applied and cured on the substrate, and an overcoat applied and cured on the undercoat comprising a hydrolyzate of an epoxy-containing silicon compound, at least one member of the group of hydrolyzates of organic silicon compounds, colloidal silica and organic titania compounds, and a curing catalyst.

US-A-4,500,669 and 4,571,365 to Ashlock et al. disclose transparent, abrasion-resistant coating compositions comprising a colloidal dispersion of a water-insoluble dispersant in a water-alcohol solution of the partial condensate of silanol wherein the dispersant comprises metals, alloys, salts, oxides and hydroxides thereof.

In the Journal of Non-Crystalline Solids, Vol. 63 (1984), Philipp et al. disclose in "New Material for Contact Lenses Prepared From Si- and Ti-Alkoxides by the Sol-Gel Process" that it is possible to combine inorganic and organic elements to develop materials with special properties.

US-A-4,799,963 relates to a coating for protecting plastic substrates from UV radiation based on the product of hydrolytic polycondensation of an organoalkoxysilane in the presence of colloidal cerium oxide. It is further disclosed that polyvinylalcohol of high molecular weight (360,000) may be present in the reaction medium.

JP-A-49,003,932 discloses coating compositions for plastics wherein the hydrolysis product of an alkyltrialkyloxysilane is mixed with sodium acetate and acetic acid, applied on the plastic sheet and cured at 80°C. The cured coating has better abrasion resistance, hot water resistance and crack resistance.

Commercial abrasion-resistant coatings for stretched acrylic either contain colloidal silica and exhibit poor resistance to corrosion by solvents such as acetone and sulfuric acid, or are based on relatively soft organic polymer systems such as urethanes or melamines.

It is the object of the present invention to provide abrasion-resistant, UV protective coatings that exhibit good mechanical properties and high resistance to corrosion by solvents.

The object is solved by a siloxane-base polymer composition comprising the reaction product of:
a. an organoalkoxysilane or mixture of organoalkoxysilanes of the general formula RₓSi(OR')₄₋ₓ wherein R is an organic radical, R' is a low molecular weight alkyl group, and x is at least one and less than 4;
b. a water soluble organic film-forming polymer; and
c. cerium oxide,
characterized in that the organic film-forming polymer is polyvinylpyrrolidone and that additionally sodium acetate is present.

The invention further directed to a method of making a siloxane-base polymer composition by hydrolytic polycondensation of an organoalkoxysilane or mixture of organosilanes of the general formula RₓSi(OR')₄₋ₓ wherein R is an organic radical, R' is a low molecular weight alkyl group, and x is at least one and less than 4, in an aqueous mixture of an organic film-forming polymer and cerium oxide to form a siloxane-base polymer composition, characterized by using polyvinylpyrrolidone as organic film forming polymer and adding sodium acetate as catalyst to promote curing of the siloxane-base polymer composition.

Preferably, R is selected from the group consisting of alkyl and acrylic-functional groups. More preferably R is selected from the group consisting of methyl, ethyl and -methacryloxypropyl groups.

Preferably, R' is selected from the group consisting of methyl, ethyl, propyl and butyl.

According to one embodiment of the invention the organoalkoxysilane comprises a mixture of acrylic-functional silane and alkyalkoxysilane.

The preferred ratio of silane to polyvinylpyrrolidone is about 30.

The invention also relates to an abrasion resistant and ultraviolet radiation resistant coated plastic transparency comprising:
a. a rigid transparent plastic substrate; and
b. a siloxane coating obtainable by applying to the substrate and curing the siloxane-base coating composition.
Preferably, the rigid transparent plastic is selected from the group consisting of acrylic polymers and polycarbonate.

To combine the mechanical strength and stability of inorganic materials with the flexibility and film-forming ability of organic materials, organic-inorganic hybrid polymers in accordance with the present invention are prepared by hydrolytic condensation polymerization of an organoalkoxysilane in the presence of polyvinylpyrrolidone. Cerium oxide is incorporated into the polymer for attenuation of ultraviolet radiation.

The hydrolysis of silanes, particularly an organoalkoxysilane of the general formula RₓSi(OR')₄₋ₓ wherein R is an organic radical, R' is a low molecular weight alkyl group and x is at least one and less than 4, such as methyltrimethoxysilane, dimethyldiethoxysilane and γ-methacryloxypropyltriethoxysilane and mixtures thereof, can be carried out under controlled conditions in the presence of appropriate additives, and produces stable, clear solutions that exhibit excellent adhesion to unprimed stretched or cast acrylic. Removal of sodium ions from silica sols by cation exchange resins in the hydrogen ion (H+) form improves the flow and adhesion of the coating solution, and improves the durability and abrasion resistance of the cured coating. Cured coatings, preferably about 4 »m thick, typically exhibit Bayer abrasion results (i.e., percent haze after 300 cycles of one kilogram load) of 5-10 percent, have a stress crazing time of 17 minutes upon exposure to acetone and 30 minutes upon exposure to 75% sulfuric acid under 20.7 x 10⁶ Pa (3000 pounds per square inch) pressure, and remain crack-free for up to 1900 hours of ultraviolet radiation exposure.

Preferably, the silane hydrolytic polycondensation is catalyzed by an appropriate acid which is volatile and which does not lower the pH of the solution excessively. Preferred catalysts include acetic acid and trifluoroacetic acid. The temperature of the hydrolytic polycondensation reaction must be controlled either by external cooling, or by adjusting the solvent and acid composition to control the reaction rate, preferably not to exceed 45°C. Sodium acetate, is added as catalyst to promote complete cure of the siloxane polymer at temperatures preferably in the range of 80°C. Polyvinylpyrrolidone, preferably having a molecular weight of at least 300,000, is added to optimize film formation. Colloidal ceria is added for attenuation of ultraviolet radiation. After adding aqueous colloidal ceria sol to a partially hydrolyzed alkoxysilane sol, particularly a sodium-depleted silane-silica coating composition, anion exchange with resin in the hydroxyl ion (OH) form produces a solution which forms coatings with lower initial haze. In order to incorporate ceria without forming haze, it is necessary to control the pH of the sol at a relatively high level. This is accomplished by omitting additional acid catalyst for silane hydrolysis and increasing the quantity of sodium acetate.

According to another embodiment of the invention the silane hydrolytic polycondensation is catalyzed by an alkali metal carboxylic acid which is volatile and which does not lower the pH of the solution excessively. Preferred catalysts include sodium acetate and a preferred pH is about 5. The temperature of the hydrolytic polycondensation reaction may be controlled either by external cooling, or by adjusting the solvent and acid composition to control the reaction rate, preferably not to exceed 45°C. Sodium acetate, is added as catalyst to promote complete cure of the siloxane polymer at temperatures preferably in the range of 80°C. Polyvinylpyrrolidone, preferably having a molecular weight of at least 300,000, is added for optimum film formation. Acrylic or primed polycarbonate samples are preferably coated by dip coating, dried in air at ambient temperature for about 30 minutes and cured at 80°C for about 2 hours.

The coated sample is subjected to standard Bayer abrasion testing for 300 cycles, and QUV-B exposure alternating 8 hours of ultraviolet irradiation at 60°C and 4 hours at 45°C and 100 percent relative humidity without ultraviolet irradiation. The above invention will be further understood from the description in the specific example which follows.

### EXAMPLE I

A solution is prepared comprising 3.0 grams of polyvinylpyrrolidone dissolved in a solution comprising 45 grams of water and 15 grams of aqueous colloidal ceria sol. The ceria sol is 20 percent solids, has a pH of 3.2 and is commercially available from Rhone-Poulenc. The polyvinylpyrrolidone has a molecular weight of about 630,000 and is commercially available as K-90 from GAF Corp. A mixture of silanes comprising 105 grams of methyltriethoxysilane and 10.4 grams of dimethyldiethoxysilane is added to the aqueous polyvinylpyrrolidone/ceria mixture at room temperature. No acid catalyst is used. After vigorously stirring the reaction mixture for about one hour, the immiscible aqueous sol and organosilanes mix with the evolution of heat to form a clear orange sol. After another hour of mixing, 50 grams of isopropanol, 25 grams of diacetone alcohol and 0.8 grams of sodium acetate trihydrate are added. The pH of the reaction mixture increases to about 5.0. After further stirring for about 30 minutes, the sol is filtered and applied to either acrylic substrates or polycarbonate substrates treated with an acrylic primer by dip coating for five minutes at room temperature. The coating is air-dried for at least 5 minutes, then cured at 80°C for 0.5 to 2 hours. The luminous transmittance is 91.5 percent and the haze is 0.5 percent. After 300 cycles of Bayer abrasion testing, the coated samples exhibit only 8 to 12 percent haze, compared with 50 percent haze for uncoated acrylic after the same abrasion testing. After 300 cycles of Taber abrasion testing, the coated samples exhibit 10 to 14 percent haze. The coating withstands 400 to 600 hours of QUV-B313 without cracking, crazing or debonding and with a change in yellowness index ( YID) of less than 1, and more than 1200 hours of QUV-540.

The above example is offered to illustrate the present invention. The composition and concentration of the silane, constitution of the alcohol diluent, concentration and type of the acid catalyst, water content, organic polymer and proportion, ceria sol concentration and proportion, and other reaction conditions may be varied in accordance with the present invention. The abrasion resistant siloxane organic hybrid polymer coating of the present invention containing colloidal ceria for attenuation of ultraviolet radiation may be used on other substrates. The scope of the present invention is defined by the following claims.

## Claims (Claims for the following Contracting State(s): DE, FR, GB, IT)

1. A siloxane-base polymer composition comprising the reaction product of:
a. an organoalkoxysilane or mixture of organoalkoxysilanes of the general formula RₓSi(OR')₄₋ₓ wherein R is an organic radical, R' is a low molecular weight alkyl group, and x is at least one and less than 4;
b. a water soluble organic film-forming polymer; and
c. cerium oxide,
**characterized in that**
the organic film-forming polymer is polyvinylpyrrolidone and that additionally sodium acetate is present.

2. The polymer composition according to claim 1,
**characterized in that**
R' is selected from the group consisting of methyl, ethyl, propyl and butyl.

3. The polymer composition according to claim 1,
**characterized in that**
R is selected from the group consisting of alkyl and acrylic-functional groups.

4. The polymer composition according to claim 3,
**characterized in that**
R is selected from the group consisting of methyl, ethyl and γ-methacryloxypropyl groups.

5. The polymer composition according to any of claims 1-4,
**characterized in that**
the ratio of silane to polyvinylpyrrolidone is about 30.

6. The polymer composition according to any of claims 1-5,
**characterized in that**
the cerium oxide is in the form of colloidal ceria.

7. A method of making a siloxane-base polymer composition by hydrolytic polycondensation of an organoalkoxysilane or mixture of organosilanes of the general formula RₓSi(OR')₄₋ₓ wherein R is an organic radical, R' is a low molecular weight alkyl group, and x is at least one and less than 4, in an aqueous mixture of an organic film-forming polymer and cerium oxide to form a siloxane-base polymer composition,
**characterized by**
using polyvinylpyrrolidone as organic film forming polymer and adding sodium acetate as catalyst to promote curing of the siloxane-base polymer composition.

8. The method of claim 7
**characterized by**
catalyzing the hydrolytic polycondensation by an acid.

9. The method of claim 7
**characterized by**
catalyzing the hydrolytic polycondensation by sodium acetate.

10. The method of claim 7,
**characterized in that**
R' is selected from the group consisting of methyl, ethyl, propyl and butyl.

11. The method of claim 7,
**characterized in that**
R is selected from the group consisting of alkyl and acrylic-functional groups.

12. The method of claim 11,
**characterized in that**
R is selected from the group consisting of methyl, ethyl and γ-methacryloxypropyl groups.

13. The method of claim 11,
**characterized in that**
said organoalkoxysilane comprises a mixture of acrylic-functional silane and alkylalkoxysilane.

14. The method of claim 13,
**characterized in that**
said acrylic functional silane is γ-methacryloxypropyltriethoxysilane and said alkylalkoxysilane is methyltrimethoxysilane.

15. The method of any of claims 7-14,
**characterized in that**
said cerium oxide is in the form of colloidal ceria, further comprising the step of anion-exchanging the mixture.

16. An abrasion resistant and ultraviolet radiation resistant coated plastic transparency comprising:
a. a rigid transparent plastic substrate; and
b. a siloxane coating obtainable by applying to the substrate and curing the siloxane-base coating composition according to claims 1-6.

17. An article according to claim 16,
**characterized in that**
the rigid transparent plastic is selected from the group consisting of acrylic polymers and polycarbonate.

## Claims (Claims for the following Contracting State(s): ES)

1. A method for preparing a siloxane-base polymer composition comprising the reaction product of:
a. an organoalkoxysilane or mixture of organoalkoxysilanes of the general formula RₓSi(OR')₄₋ₓ wherein R is an organic radical, R' is a low molecular weight alkyl group, and x is at least one and less than 4;
b. a water soluble organic film-forming polymer; and
c. cerium oxide by combining the components,
**characterized in that**
the organic film-forming polymer is polyvinylpyrrolidone and that additionally sodium acetate is present.

2. The method according to claim 1,
**characterized in that**
R' is selected from the group consisting of methyl, ethyl, propyl and butyl.

3. The method according to claim 1,
**characterized in that**
R is selected from the group consisting of alkyl and acrylic-functional groups.

4. The method according to claim 3,
**characterized in that**
R is selected from the group consisting of methyl, ethyl and γ-methacryloxypropyl groups.

5. The method according to any of claims 1-4,
**characterized in that**
the ratio of silane to polyvinylpyrrolidone is about 30.

6. The method according to any of claims 1-5,
**characterized in that**
the cerium oxide is in the form of colloidal ceria.

7. A method of making a siloxane-base polymer composition by hydrolytic polycondensation of an organoalkoxysilane or mixture of organosilanes of the general formula RₓSi(OR')₄₋ₓ wherein R is an organic radical, R' is a low molecular weight alkyl group, and x is at least one and less than 4, in an aqueous mixture of an organic film-forming polymer and cerium oxide to form a siloxane-base polymer composition,
**characterized by**
using polyvinylpyrrolidone as organic film forming polymer and adding sodium acetate as catalyst to promote curing of the siloxane-base polymer composition.

8. The method of claim 7,
**characterized by**
catalyzing the hydrolytic polycondensation by an acid.

9. The method of claim 7,
**characterized by**
catalyzing the hydrolytic polycondensation by sodium acetate.

10. The method of claim 7,
**characterized in that**
R' is selected from the group consisting of methyl, ethyl, propyl and butyl.

11. The method of claim 7,
**characterized in that**
R is selected from the group consisting of alkyl and acrylic-functional groups.

12. The method of claim 11,
**characterized in that**
R is selected from the group consisting of methyl, ethyl and γ-methacryloxypropyl groups.

13. The method of claim 11,
**characterized in that**
said organoalkoxysilane comprises a mixture of acrylic-functional silane and alkylalkoxysilane.

14. The method of claim 13,
**characterized in that**
said acrylic functional silane is γ-methacryloxypropyltriethoxysilane and said alkylalkoxysilane is methyltrimethoxysilane.

15. The method of any of claims 7-14,
**characterized in that**
said cerium oxide is in the form of colloidal ceria, further comprising the step of anion-exchanging the mixture.

16. An abrasion resistant and ultraviolet radiation resistant coated plastic transparency comprising:
a. a rigid transparent plastic substrate; and
b. a siloxane coating obtainable by applying to the substrate and curing the siloxane-base coating composition prepared according to the method of claims 1-6.

17. An article according to claim 16,
**characterized in that**
the rigid transparent plastic is selected from the group consisting of acrylic polymers and polycarbonate.

## Patentansprüche (Patentansprüche für folgende(n) Vertragsstaat(en): DE, FR, GB, IT)

1. Eine auf Siloxan basierende Polymer-Zusammensetzung, bestehend aus dem Reaktionsprodukt von:
a. einem Organoalkoxysilan oder einer Mischung von Organoalkoxysilanen der allgemeinen Formel RₓSi(OR')₄₋ₓ, in der R ein organisches Radikal bedeutet, R' eine Alkylgruppe mit einem niedrigen Molekulargewicht darstellt und x mindestens eins und weniger als vier ist;
b. einem wasserlöslichen, organischen, filmbildenden Polymer; und
c. Ceroxyd,
dadurch gekennzeichnet, daß
das organische filmbildende Polymer Polyvinylpyrrolidon ist und daß zusätzlich Sodiumazetat vorhanden ist.

2. Die Polymer-Zusammensetzung nach Anspruch 1, dadurch gekennzeichnet, daß R' aus der aus Methyl, Äthyl, Propyl und Butyl bestehenden Gruppe ausgewählt wird.

3. Die Polymer-Zusammensetzung nach Anspruch 1, dadurch gekennzeichnet, daß R aus der Gruppe ausgewählt wird, die aus Alkyl und acrylfunktionellen Gruppen besteht.

4. Die Polymer-Zusammensetzung nach Anspruch 3, dadurch gekennzeichnet, daß R aus der Gruppe ausgewählt wird, die aus Methyl, Äthyl und γ-methacryloxypropyl Gruppen besteht.

5. Die Polymer-Zusammensetzung nach einem der Ansprüche 1 bis 4, dadurch gekennzeichnet, daß das Verhältnis von Silan zu Polyvinylpyrrolidon ungefähr 30 beträgt.

6. Die Polymer-Zusammensetzung nach einem der Ansprüche 1 bis 5, dadurch gekennzeichnet, daß das Ceroxyd in Form von kolloidalem Cer existiert.

7. Eine Methode für die Zubereitung einer auf Siloxan basierenden Polymer-Zusammensetzung durch hydrolytische Polykondensation eines Organoalkoxysilans oder einer Mischung von Organosilanen der allgemeinen Formel RₓSi(OR')₄₋ₓ, in der R ein organisches Radikal bedeutet, R' eine Alkylgruppe mit einem niedrigen Molekulargewicht darstellt und x mindestens eins und weniger als vier ist, in einer wäßrigen Lösung aus einem organischen filmbildenden Poylmer und Ceroxyd, um eine auf Siloxan basierende Polymer-Zusammensetzung zu bilden,
dadurch gekennzeichnet, daß
Polyvinylpyrrolidon als organisches filmbildendes Polymer verwendet wird und Sodiumazetat als Katalysator hinzugefügt wird, um das Aushärten der auf Siloxane basierenden Polymer-Zusammensetzung zu fördern.

8. Die Methode nach Anspruch 7, dadurch gekennzeichnet, daß die hydrolytische Polykondensation durch eine Säure katalysiert wird.

9. Die Methode nach Anspruch 7, dadurch gekennzeichnet, daß die hydrolytische Polykondensation durch Sodiumazetat katalysiert wird.

10. Die Methode nach Anspruch 7, dadurch gekennzeichnet, daß R' aus der aus Methyl, Äthyl, Propyl und Butyl bestehenden Gruppe ausgewählt wird.

11. Die Methode nach Anspruch 7, dadurch gekennzeichnet, daß R aus der Gruppe ausgewählt wird, die aus Alkyl und acryl-funktionellen Gruppen besteht.

12. Die Methode nach Anspruch 11, dadurch gekennzeichnet, daß R aus der Gruppe ausgewählt wird, die aus Methyl, Äthyl und γ-methacryloxypropyl Gruppen besteht.

13. Die Methode nach Anspruch 11, dadurch gekennzeichnet, daß das besagte Organoalkoxysilan eine Mischung von acryl-funktionellem Silan und Alkylalkoxysilan enthält.

14. Die Methode nach Anspruch 13, dadurch gekennzeichnet, daß das besagte acrylfunktionelle Silan γ-methacryloxypropyl-triäthoxysilan ist und besagtes Alkylalkoxysilan Methyl-trimethoxysilan ist.

15. Die Methode nach einem der Ansprüche 7 bis 14, dadurch gekennzeichnet, daß das besagte Ceroxyd in Form von kolloidalem Cer vorkommt und außerdem die Mischung einem Anionenaustausch unterworfen wird.

16. Eine gegen Abnutzung und ultraviolette Strahlung widerstandsfähige beschichtetes Plastiktransparent, die folgendes einschließt:
a. ein festes, transparentes, plastisches Substrat und
b. eine durch Auftrag auf das Substrat sowie Aushärten der auf Siloxan basierenden Zusammensetzung in der Zubereitung entsprechend der Methode nach den Ansprüchen 1 bis 6 erhältliche Siloxanschicht .

17. Ein Artikel nach Anspruch 16, dadurch gekennzeichnet, daß das feste transparente Plastikmaterial aus der aus Acrylpolymeren und Polykarbonaten bestehenden Gruppe ausgewählt wurde.

## Patentansprüche (Patentansprüche für folgende(n) Vertragsstaat(en): ES)

1. Eine Methode für die Zubereitung einer auf Siloxan basierenden Polymer-Zusammensetzung, bestehend aus dem Reaktionsprodukt von:
a. einem Organoalkoxysilan oder einer Mischung von Organoalkoxysilanen der allgemeinen Formel RₓSi(OR')₄₋ₓ, in der R ein organisches Radikal bedeutet, R' eine Alkylgruppe mit einem niedrigen Molekulargewicht darstellt und x mindestens eins und weniger als vier ist;
b. einem wasserlöslichen, organischen, filmbildenden Polymer; und
c. Ceroxyd, mittels Kombination der Komponenten,
dadurch gekennzeichnet, daß
das organische filmbildende Polymer Polyvinylpyrrolidon ist und daß zusätzlich Sodiumazetat vorhanden ist.

2. Die Methode nach Anspruch 1, dadurch gekennzeichnet, daß R' aus der aus Methyl, Äthyl, Propyl und Butyl bestehenden Gruppe ausgewählt wird.

3. Die Methode nach Anspruch 1, dadurch gekennzeichnet, daß R aus der Gruppe ausgewählt wird, die aus Alkyl und acryl-funktionellen Gruppen besteht.

4. Die Methode nach Anspruch 3, dadurch gekennzeichnet, daß R aus der Gruppe ausgewählt wird, die aus Methyl, Äthyl und γ-methacryloxypropyl Gruppen besteht.

5. Die Methode nach einem der Ansprüche 1 bis 4, dadurch gekennzeichnet, daß das Verhältnis von Silan zu Polyvinyl-pyrrolidon ungefähr 30 beträgt.

6. Die Methode nach einem der Ansprüche 1 bis 5, dadurch gekennzeichnet, daß das Ceroxyd in Form von kolloidalem Cer existiert.

7. Eine Methode für die Zubereitung einer auf Siloxan basierenden Polymer-Zusammensetzung durch hydrolytische Polykondensation eines Organoalkoxysilans oder einer Mischung von Organosilanen der allgemeinen Formel RₓSi(OR')₄₋ₓ, in der R ein organisches Radikal bedeutet, R' eine Alkylgruppe mit einem niedrigen Molekulargewicht darstellt und x mindestens eins und weniger als vier ist, in einer wäßrigen Lösung aus einem organischen filmbildenden Poylmer und Ceroxyd, um eine auf Siloxan basierende Polymer-Zusammensetzung zu bilden,
dadurch gekennzeichnet, daß
Polyvinylpyrrolidon als organisches filmbildendes Polymer verwendet wird und Sodiumazetat als Katalysator hinzugefügt wird, um das Aushärten der auf Siloxane basierenden Polymer-Zusammensetzung zu fördern.

8. Die Methode nach Anspruch 7, dadurch gekennzeichnet, daß die hydrolytische Polykondensation durch eine Säure katalysiert wird.

9. Die Methode nach Anspruch 7, dadurch gekennzeichnet, daß die hydrolytische Polykondensation durch Sodiumazetat katalysiert wird.

10. Die Methode nach Anspruch 7, dadurch gekennzeichnet, daß R' aus der aus Methyl, Äthyl, Propyl und Butyl bestehenden Gruppe ausgewählt wird.

11. Die Methode nach Anspruch 7, dadurch gekennzeichnet, daß R aus der Gruppe ausgewählt wird, die aus Alkyl und acryl-funktionellen Gruppen besteht.

12. Die Methode nach Anspruch 11, dadurch gekennzeichnet, daß R aus der Gruppe ausgewählt wird, die aus Methyl, Äthyl und γ-methacryloxypropyl Gruppen besteht.

13. Die Methode nach Anspruch 11, dadurch gekennzeichnet, daß das besagte Organoalkoxysilan eine Mischung von acryl-funktionellem Silan und Alkylalkoxysilan enthält.

14. Die Methode nach Anspruch 13, dadurch gekennzeichnet, daß das besagte acrylfunktionelle Silan γ-methacryloxypropyl-triäthoxysilan ist und besagtes Alkylalkoxysilan Methyl-trimethoxysilan ist.

15. Die Methode nach einem der Ansprüche 7 bis 14, dadurch gekennzeichnet, daß das besagte Ceroxyd in Form von kolloidalem Cer vorkommt und außerdem die Mischung einem Anionenaustausch unterworfen wird.

16. Eine gegen Abnutzung und ultraviolette Strahlung widerstandsfähige beschichtetes Plastiktransparent, die folgendes einschließt:
a. ein festes, transparentes, plastisches Substrat und
b. eine durch Auftrag auf das Substrat sowie Aushärten der auf Siloxan basierenden Zusammensetzung in der Zubereitung entsprechend der Methode nach den Ansprüchen 1 bis 6 erhältliche Siloxanschicht .

17. Ein Artikel nach Anspruch 16, dadurch gekennzeichnet, daß das feste transparente Plastikmaterial aus der aus Acrylpolymeren und Polykarbonaten bestehenden Gruppe ausgewählt wurde.

## Revendications (Revendications pour l'(les) Etat(s) contractant(s) suivant(s): DE, FR, GB, IT)

1. Une composition polymère à base de siloxane composée du produit réactionnel :
a. d'un organo-alkoxysilane ou d'un mélange d'organoalkoxysilane de la formule générale RₓSi(OR')₄₋ₓ, où R est un radical organique, R' un groupe alkyl à faible poids moléculaire et x au moins égal à un et inférieur à 4 ;
b. un polymère organique, filmogène, soluble à l'eau; et
c. de l'oxyde de cérium,
caractérisé en ce que le polymère organique filmogène est de la polyvinylpyrrolidone, et en ce que de l'acétate de sodium supplémentaire est présent.

2. La composition polymère conforme à la revendication 1, caractérisée en ce que R' est sélectionné dans le groupe composé de méthyle, d'éthyle, de propyle et de butyle.

3. La composition polymère conforme à la revendication 1, caractérisée en ce que R est sélectionné dans le groupe composé des groupes fonctionnels acryliques et d'alkyl.

4. Le composition polymère conforme à la revendication 3, caractérisée en ce que R est sélectionné dans le groupe composé des groupes de méthyle, d'éthyle et de γ-méthacryloxypropyle.

5. La composition polymère conforme à une des quelconques revendications 1 à 4,
caractérisée en ce que
le rapport du silane sur la polyvinylpyrrolidone est d'environ 30.

6. La composition polymère conforme à une des quelconques revendications 1 à 5,
caractérisée en ce que
l'oxyde de cérium se présente sous la forme d'oxyde cérique colloïdal.

7. Une méthode de fabrication d'une composition polymère à base de siloxane par polycondensation hydrolytique d'un organoalkoxysilane ou d'un mélange d'organosilane de la formule générale RₓSi(OR')₄₋ₓ, où R est un radical organique, R' un groupe alkyl à faible poids moléculaire, et x au moins égal à 1 et inférieur à 4, dans un mélange aqueux d'un polymère filmogène organique et d'oxyde de cérium pour former une composition polymère à base de siloxane,
caractérisée par
l'utilisation de polyvinylpyrrolidone comme film organique formant le polymère et l'ajout d'acétate de sodium comme catalyseur pour favoriser la polymérisation de la composition polymère à base de siloxane.

8. La méthode de la revendication 7
caractérisée par
catalysation de la polycondensation hydrolytique par un acide.

9. La méthode de la revendication 7
caractérisée par
la catalysation de la polycondensation hydrolitique par l'acétate de sodium.

10. La méthode de la revendication 7
caractérisée en ce que
R' est sélectionné dans le groupe composé de méthyle, d'éthyle, de propyle et de butyle.

11. La méthode de la revendication 7
caractérisée en ce que
R est sélectionné dans le groupe composé des groupes fonctionnels acryliques et d'alkyl.

12. La méthode de la revendication 11
caractérisée en ce que
R est sélectionné dans le groupe composé des groupes de méthyle, éthyle et γ-méthacryloxypropyle.

13. La méthode de la revendication 11
caractérisée en ce que
ladite organoalkoxysilane est constituée d'un mélange de silane acrylique fonctionnelle et d'alkylalkoxysilane.

14. La méthode de la revendication 13
caractérisée en ce que
ladite silane acrylique fonctionnelle est de la γ-méthacryloxypropyltriethoxysilane et en ce que ladite alkylalkoxysilane est de la méthyltrimethoxysilane.

15. La méthode d'une des quelconques revendications 7 à 14,
caractérisée en ce que
ledit oxyde de cérium se présente sous la forme d'oxyde cérique colloïdal, intégrant également l'étape d'échange d'anions du mélange.

16. Un film transparent plastique à revêtement résistant à l'abrasion et aux rayons ultraviolets intégrant :
a. un substrat en plastique solide transparent ; et
b. une couche de siloxane pouvant être obtenue par application sur le substrat et polymérisation de la composition du revêtement à base de siloxane, conformément aux revendications 1 à 6.

17. Un article conforme à la revendication 16,
caractérisé en ce que le plastique transparent rigide est sélectionné dans le groupe composé du polymère acrylique et du polycarbonate.

## Revendications (Revendications pour l'(les) Etat(s) contractant(s) suivant(s): ES)

1. Une méthode pour la préparation d'une composition polymère à base de siloxane composée du produit réactionnel :
a. d'un organo-alkoxysilane ou d'un mélange d'organoalkoxysilane de la formule générale RₓSi(OR')₄₋ₓ, où R est un radical organique, R' un groupe alkyl à faible poids moléculaire et x au moins égal à un et inférieur à 4 ;
b. un polymère organique, filmogène, soluble à l'eau; et
c. de l'oxyde de cérium,
par combination des composants,
caractérisé en ce que le polymère organique filmogène est de la polyvinylpyrrolidone, et en ce que de l'acétate de sodium supplémentaire est présent.

2. Une méthode conforme à la revendication 1, caractérisée en ce que R' est sélectionné dans le groupe composé de méthyle, d'éthyle, de propyle et de butyle.

3. Une méthode conforme à la revendication 1, caractérisée en ce que R est sélectionné dans le groupe composé des groupes fonctionnels acryliques et d'alkyl.

4. Une méthode conforme à la revendication 3, caractérisée en ce que R est sélectionné dans le groupe composé des groupes de méthyle, d'éthyle et de γ-méthacryloxypropyle.

5. Une méthode conforme à une des quelconques revendications 1 à 4,
caractérisée en ce que
le rapport du silane sur la polyvinylpyrrolidone est d'environ 30.

6. Une méthode conforme à une des quelconques revendications 1 à 5,
caractérisée en ce que
l'oxyde de cérium se présente sous la forme d'oxyde cérique colloïdal.

7. Une méthode de fabrication d'une composition polymère à base de siloxane par polycondensation hydrolytique d'un organoalkoxysilane ou d'un mélange d'organosilane de la formule générale RₓSi(OR')₄₋ₓ, où R est un radical organique, R' un groupe alkyl à faible poids moléculaire, et x au moins égal à 1 et inférieur à 4, dans un mélange aqueux d'un polymère filmogène organique et d'oxyde de cérium pour former une composition polymère à base de siloxane,
caractérisée par
l'utilisation de polyvinylpyrrolidone comme film organique formant le polymère et l'ajout d'acétate de sodium comme catalyseur pour favoriser la polymérisation de la composition polymère à base de siloxane.

8. La méthode de la revendication 7
caractérisée par
catalysation de la polycondensation hydrolytique par un acide.

9. La méthode de la revendication 7
caractérisée par
la catalysation de la polycondensation hydrolitique par l'acétate de sodium.

10. La méthode de la revendication 7
caractérisée en ce que
R' est sélectionné dans le groupe composé de méthyle, d'éthyle, de propyle et de butyle.

11. La méthode de la revendication 7
caractérisée en ce que
R est sélectionné dans le groupe composé des groupes fonctionnels acryliques et d'alkyl.

12. La méthode de la revendication 11
caractérisée en ce que
R est sélectionné dans le groupe composé des groupes de méthyle, éthyle et γ-méthacryloxypropyle.

13. La méthode de la revendication 11
caractérisée en ce que
ladite organoalkoxysilane est constituée d'un mélange de silane acrylique fonctionnelle et d'alkylalkoxysilane.

14. La méthode de la revendication 13
caractérisée en ce que
ladite silane acrylique fonctionnelle est de la γ-méthacryloxypropyltriethoxysilane et en ce que ladite alkylalkoxysilane est de la méthyltrimethoxysilane.

15. La méthode d'une des quelconques revendications 7 à 14,
caractérisée en ce que
ledit oxyde de cérium se présente sous la forme d'oxyde cérique colloïdal, intégrant également l'étape d'échange d'anions du mélange.

16. Un film transparent plastique à revêtement résistant à l'abrasion et aux rayons ultraviolets intégrant :
a. un substrat en plastique solide transparent ; et
b. une couche de siloxane pouvant être obtenue par application sur le substrat et polymérisation de la composition du revêtement à base de siloxane, conformément aux revendications 1 à 6.

17. Un article conforme à la revendication 16,
caractérisé en ce que le plastique transparent rigide est sélectionné dans le groupe composé du polymère acrylique et du polycarbonate.
